**Europäisches Patentamt**

**European Patent Office**

**Office européen des brevets**

(19)

(11) Veröffentlichungsnummer: **0 260 530 B1**

(12) # EUROPÄISCHE PATENTSCHRIFT

(45) Veröffentlichungstag der Patentschrift: **02.01.92**

(51) Int. Cl.[5]: **B01J 8/04**, //C01B23/00, B01D53/36

(21) Anmeldenummer: **87112803.9**

(22) Anmeldetag: **02.09.87**

(54) **Verfahren zur Durchführung katalytischer Reaktionen.**

(30) Priorität: **17.09.86 DE 3631642**

(43) Veröffentlichungstag der Anmeldung:
**23.03.88 Patentblatt 88/12**

(45) Bekanntmachung des Hinweises auf die
Patenterteilung:
**02.01.92 Patentblatt 92/01**

(84) Benannte Vertragsstaaten:
**DE ES FR GB**

(56) Entgegenhaltungen:
EP-A- 0 130 807        DE-A- 3 513 912
GB-A- 1 449 091        GB-A- 1 449 092
US-A- 2 306 011        US-A- 4 061 659
US-A- 4 376 209

(73) Patentinhaber: **Linde Aktiengesellschaft**

**W-8023 Höllriegelskreuth(DE)**

(72) Erfinder: **Heisel, Michael, Dr. rer. nat.
Gistlstrasse 54
W-8023 Pullach(DE)**
Erfinder: **Lohmüller, Reiner, Dr. rer. nat.
Friesenstrasse 13
W-2970 Emden(DE)**
Erfinder: **Marold, Freimut
Hauptstrasse 99
W-8014 Neubiberg(DE)**

(74) Vertreter: **Schaefer, Gerhard, Dr.
Linde Aktiengesellschaft Zentrale Patentabteilung
W-8023 Höllriegelskreuth(DE)**

EP 0 260 530 B1

**Beschreibung**

Die Erfindung betrifft ein Verfahren sowie eine Vorrichtung zur Durchführung katalytischer Reaktionen mit starker Wärmetönung, bei dem ein Reaktionsgemisch durch ein Katalysatorbett und ein sich anschließendes Bett eines katalytisch inerten Materials geführt wird, denen Reaktionswärme durch indirekten Wärmetausch entzogen bzw. zugeführt wird.

Ein derartiges Verfahren ist aus der DE-OS 32 170 66 bekannt. Bei diesem bekannten Verfahren ist innerhalb eines Reaktormantels eine einheitliche, nur von gewickelten Kühlrohren durchsetzte Katalysatorschüttung vorgesehen. Ein in den Reaktor eingespeistes Reaktionsgemisch tritt deshalb unmittelbar ins Katalysatorbett ein und wird unmittelbar nach Verlassen des Katalysatorbetts wieder aus dem Reaktor abgezogen.

Ein ähnliches Verfahren ist auch aus der EP-A 0 130 807 bekannt. Hier wird ein Reaktionsgemisch durch ein Katalysatorbett, dem Reaktionswärme durch indirekten Wärmetausch entzogen bzw. zugeführt werden kann, geführt. An dieses Katalysatorbett schließt sich mindestens ein Bett eines katalytisch inerten Materials an, das ebenfalls im indirekten Wärmetausch mit einem entsprechenden Wärmetauschmedium steht. Das katalytisch inerte Bett dient bei diesem Verfahren jedoch ausschließlich als Kühlzone für eine vorausgegangene exotherme Reaktion.

Eine artverwandte Vorrichtung wird in der US-A 2,306,011 beschrieben. Hierbei handelt es sich um Vorrichtungen für katalytische Reaktionen, vornehmlich in zylindrischer Bauweise, in denen mehrere Katalysatorbetten, die jeweils voneinander durch leere Zwischenräume getrennt, angeordnet sind. Die Zwischenräume können mit Gaszuführ- bzw. Gasabzugsleitungen verbunden sein, wodurch eine schnellere Regeneration der Katalysatorbetten möglich ist, was vor allem bei einer großen Anzahl von Katalysatorbetten verfahrenstechnische Vorteile mit sich bringt. In den Katalysatorbetten oder den Zwischenräumen können, entsprechend der beabsichtigten Verfahrensführung, Kühl- bzw. Heizschlangen montiert sein.

Obwohl die oben beschriebenen Reaktionsführungen in einzelnen Fällen günstig sind, gibt es viele Anwendungsfälle, bei denen eine flexiblere Verfahrensweise wünschenswert ist. Dies kann beispielsweise dann der Fall sein, wenn die Reaktionsteilnehmer erst beim Eintritt in den Reaktor miteinander vermischt werden und sich ohne hinreichende Vermischung Temperaturspitzen im Eintrittsbereich der Katalysatorschüttung ergeben, oder wenn einzelne Reaktionsteilnehmer an verschiedenen Stellen in den Reaktor eingeführt werden müssen.

Der Erfindung liegt deshalb die Aufgabe zugrunde, ein Verfahren sowie eine Vorrichtung der eingangs genannten Art so auszugestalten, daß für eine Vielzahl von Reaktionen ein flexibler Betrieb mit einer sicheren Beherrschung der wärmetechnischen Probleme gewährleistet ist.

Diese Aufgabe wird dadurch gelöst, daß mehrere Katalysatorbetten mit jeweils zwischen zwei Katalysatorbetten angeordneten katalytisch inerten Betten vorgesehen sind und unterschiedliche Reaktionspartner stufenweise dem Reaktor zugeführt werden, wobei die Zufuhr der Reaktionspartner in das inerte Bett erfolgt.

Die Erfindung, bei der sich eine oder mehrere inerte Schichten an ein Katalysatorbett anschließen, sei es vor und/oder nach einem Katalysatorbett und/oder zwischen zwei bzw. mehreren Katalysatorbetten, ermöglicht in einfacher Weise eine Anpassung an eine Vielzahl von speziellen Verfahrensbedingungen. Das inerte Bett kann dabei verschiedene Funktionen ausüben, beispielsweise als Gasverteilungszone, als Mischzone für Reaktionsteilnehmer, als Wärmetauschzone, als Reinigungszone oder für weitere Zwecke genutzt werden.

Zu den Vorteilen des erfindungsgemäßen Verfahrens gehört beispielsweise, daß die Möglichkeit besteht, auf einfache Weise unterschiedliche Reaktionspartner stufenweise in den Reaktor einzuführen, wobei die Zufuhr in das inerte Bett, das als Gasverteilungszone wirkt, erfolgt.

Es ist auch möglich, die Reaktanden außerhalb des Reaktors zumindest teilweise miteinander zu mischen, wobei das inerte Bett zusätzlich als Mischbett dient, in dem eine intensive Vermischung der Reaktanden erfolgt. Wenn von der Reaktionstemperatur her erforderlich, kann ein Inertbett im Eingangsbereich eines Reaktors aufgrund der im Inertbett vorhandenen Heiz- bzw. Kühlschlangen auch zur Vorwärmung des eintretenden Rohgases dienen.

Als Wärmequelle dient dabei beispielsweise die Exothermie des nachfolgenden Prozessschrittes, wobei die Wärme über das in Rohrschlangen geführte Kühlmedium aus der Katalysatorzone in den Bereich des Inertbetts geführt wird. In analoger Weise läßt sich ein Teil der Nachkühlung des Produktgases im Austrittsbereich eines Reaktors verwirklichen, indem das Kühlmedium dort gegen ausreagiertes Produktgas vorgewärmt wird.

Bei Anwendung des erfindungsgemäßen Verfahrens können auch zwei oder mehrere katalysierte Reaktionen in einem einzigen Reaktor durchgeführt werden, beispielsweise eine Reduktionsgaserzeugung mit einer nachfolgenden Hydrierung. Dabei ist es von Vorteil, daß in den verschiedenen Katalysatorbetten für die jeweiligen Reaktionen unterschiedliche Katalysatormaterialien eingesetzt werden können. Die zwischen einzelnen Katalysatorbetten angeordneten Inertbetten erfüllen dabei zusätzlich auch den Zweck, die Katalysatorbetten räumlich voneinander zu trennen, um bessere Befüllung/Entleerung des Reaktors zu ermöglichen, bessere Gasverteilung zu erreichen und die Möglichkeit zu geben, z.B. den oben eingefüllten Katalysator wieder zu verwenden und den unten eingefüllten zu ersetzen.

Um eine leichte Trennung des inerten Materials vom Katalysatormaterial zu ermöglichen, ist in einer Ausführungsform der Erfindung vorgesehen, daß das Inertmaterial aus Partikeln mit anderer Größe als die Katalysatorpartikel besteht. Das Inertmaterial kann jede beliebige Form aufweisen, häufig wird es jedoch in Kugelform vorliegen, beispielsweise in Form von Aluminiumkugeln oder anderen, für den jeweiligen Anwendungsfall inerten Materialien.

Bei Anordnung eines Inertbetts zwischen zwei Katalysatorbetten kann die Inertschicht unter anderem zur Verbesserung der Kühlung bzw. Anwärmung des Reaktionsgemisches zwischen zwei Katalysatorzonen dienen. Dies ist insbesondere bei stark exothermen Reaktionen, bei denen durch die Kühlung nur innerhalb des Katalysatorbetts mit der Rohrschlange allein keine ausreichende Kühlung erfolgt, vorteilhaft.

Auf diese Weise kann ein unzulässig hoher Temperaturanstieg vermieden werden und eine stark exotherme Reaktion, die üblicherweise beispielsweise in einer Vielzahl von hintereinandergeschalteten adiabatisch betriebenen Reaktoren durchgeführt wird, innerhalb eines einzigen Reaktors mit einer geringen Anzahl an Katalysatorschichten durchgeführt werden.

Die Erfindung läßt sich bei einer Vielzahl von Reaktionen anwenden, beispielsweise bei Oxidationen mit einer vorzugsweise stufenweise erfolgenden Zudosierung von Sauerstoff oder bei der Durchführung von Reduktionen, wobei wieder vorzugsweise das Reduktionsgas, beispielsweise Wasserstoff, stufenweise zugeführt wird.

Nachfolgend werden einige konkrete Anwendungsfälle des erfindungsgemäßen Verfahrens erläutert.

In einem ersten Anwendungsfall soll Koksofengas behandelt werden. Koksofengas enthält zur Polymerisation neigende Bestandteile wie beispielsweise Acetylen. Nach der Aufwärmung auf Reaktionstemperatur ergeben sich aufgrund dieser Komponenten leicht Probleme, da die Polymeren zu einer schnellen Verschmutzung des Katalysators führen. Um das Koksofengas weiter verarbeiten zu können, müssen die Polymerbildner daher zunächst hydriert werden. Dazu ist eine Verdichtung und Aufheizung erforderlich. Um hierbei die Polymerisation weitgehend auszuschließen, muß der Weg vom Kompressor zum Hydrierreaktor möglichst kurz gehalten werden. Dies wird erfindungsgemäß dadurch erreicht, daß im Reaktor vor dem Katalysatorbett eine Inertzone vorgesehen ist, in die Reaktionswärme zur Vorwärmung des Koksofengases übertragen wird. Dabei wird das Katalysatorbett und das vorgeschaltete Inertbett von einer Kühlschlange durchsetzt, die in Gegenstrom zur Strömungsrichtung in den Betten mit Kühlmedium durchströmt wird. Das Inertbett dient dabei zugleich als Filter für die dennoch entstandenen Polymere und schützt dadurch den Katalysator.

Ein anderes Anwendungsbeispiel für das erfindungsgemäße Verfahren liegt in der Edelgasreinigung, beispielsweise in der Trennung von Helium oder Krypton von Wasserstoff. Um Edelgase aus Gemischen mit Wasserstoffen in reiner Form zu gewinnen, wird der zunächst meist sehr hohe, typischerweise über 50% liegende Wasserstoffanteil katalytisch verbrannt. Wegen der hohen Exothermie dieser Reaktion kann je Katalysatorstufe bisher nur eine geringe Umsetzung vorgenommen werden, danach ist eine Kühlung und eine Kreislaufführung erforderlich. Bei üblichen Verfahren werden Kreislaufverhältnisse von etwa 50 benötigt d.h. es wird etwa die 50-fache Menge des jeweils neu zugeführten Rohgases im Kreislauf gefahren, un den bei der Wasserstoffverbrennung erfolgenden Temperaturanstieg zu begrenzen. Erfahrungsgemäß gehen bei derart hohen Kreislaufverhältnissen merkliche Mengen des Edelgases durch Leckverluste verloren, was die Wirtschaftlichkeit des Prozesses verschlechtert. Bei Anwendung des erfindungsgemäßen Verfahrens läßt sich die Gasreinigung wesentlich vereinfachen. Dazu kann ein Reaktor verwendet werden, der mehrere Katalysatorzonen mit jeweils dazwischengeschalteten Inertbetten aufweist, wobei in die Inertbetten jeweils ein Teilstrom des für die Verbrennung benötigten Sauerstoffs eingeführt wird. Innerhalb der Inertbetten erfolgt dann eine intensive Vermischung des zu reinigenden Edelgasstroms mit dem Sauerstoff, so daß keine explosiven Gemische an Katalysator auftreten. Eine Gasrückführung ist nicht erforderlich.

Zur Behandlung eines Gases, daß 35 Vol-% Wasserstoff und 65 Vol-% Helium aufweist, eignet sich beispielsweise ein Reaktor mit etwa 7 katalytischen Stufen. Durch die allen Katalysatorbetten gemeinsame Wärmetauscherregelung wird innerhalb des Reaktors überall die richtige Reaktionstemperatur eingestellt, beispielsweise eine Eintrittstemperatur von 110 ˚C in die einzelnen Katalysatorzonen.

In einem dritten Ausführungsbeispiel der Erfindung wird ein Styrolabgas einer Entschwefelung und Deoxo-Behandlung unterzogen. Das Styrolabgas das 84,1 mol-% Wasserstoff 8,0 mol-% $CO_2$, 2,0 mol-% $CH_4$, 0,5 mol-% $C_2H_4$, 0,2 mol-% $C_2H_6$, 0,1 mol-% $C_3H_6$, 3,9 mol-% $N_2$, 0,1 mol% Ar, 0,5 mol-% CO, 0,1 mol-% $O_2$, 0,5 mol-% aromatische Kohlenwasserstoffe, 5 Volumen-ppm Schwefelverbindungen und Spuren von Oxoalkoholen enthält, wird in einen Reaktor geführt, der vor und hinter einer Katalysatorzone jeweils ein Inertbett enthält. Durch die Inertbetten sowie die Katalysatorzone führt eine Kühlschlange. Im Eintrittsbereich des Reaktors ist zunächst ein beispielsweise Zinkoxid oder Kupfer enthaltendes Bett angeordnet, um aus dem Abgas Schwefelverbindungen abzutrennen. Das Gas tritt danach in das erste Inertbett ein, das als Heizzone ausgebildet ist, wobei das Abgas auf eine Temperatur zwischen etwa 150 und 200°C aufgeheizt wird. Bei dieser Temperatur erfolgt dann anschließend im Katalysatorbett die Umsetzung des Sauerstoffes im Abgas, vorwiegend mit $H_2$ und CO zu Wasser und $CO_2$.

Ferner sei die Erfindung noch anhand eines schematisch dargestellten Ausführungsbeispiels näher erläutert.

Ein Rohgasgemisch wird über die Leitungen 1, 3 und 4 den Inertbetten 5 und 6 zugeführt. Dabei setzt sich der Rohgasstrom in den Leitungen 3 und 4 je nach Schaltung der Ventile 7 bis 10 aus einem über Leitung 2 herangeführten Teilgasstrom und/oder zusätzlich über Leitungen 11 und 12 herangeführtem Rohgas zusammen. Diese Aufteilung des Rohgasstromes empfiehlt sich bei stark exothermen Reaktionen, ebenso ist es möglich, statt dessen über Leitung 11 und 12 weitere Reaktanden zuzuführen.

Das Rohgas durchströmt nacheinander abwechselnd die Inertbetten 6,5,15 und 17 sowie die Katalysatorbetten 13, 14 und 16, wobei in den Katalysatorbetten 13, 14 und 16 eine beispielsweise exotherme Reaktion stattfindet. Die bei der Reaktion freiwerdende Wärme wird mittels einem in den Rohrschlangen 18 im Gegenstrom geführten Wärmeträgermedium abgeführt.

Über Leitung 19 wird das Gas aus dem Reaktor abgezogen.

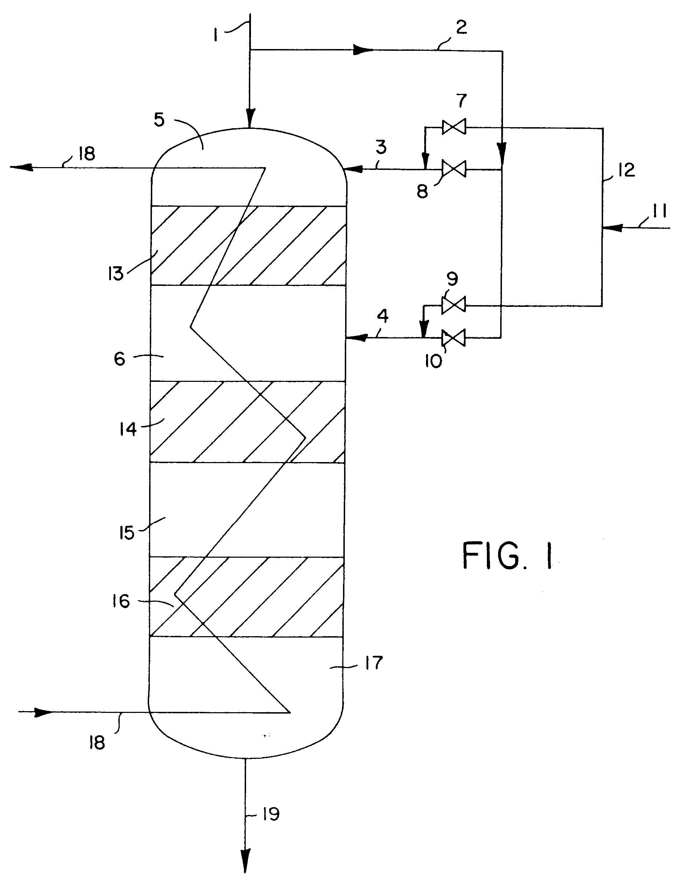

## Patentansprüche

1. Verfahren zur Durchführung katalytischer Reaktionen mit starker Wärmetönung, bei dem ein Reaktionsgemisch durch ein Katalysatorbett und ein sich anschließendes Bett eines katalytisch inerten Materials geführt wird, denen Reaktionswärme durch indirekten Wärmetausch entzogen bzw. zugeführt wird, dadurch gekennzeichnet, daß mehrere Katalysatorbetten mit jeweils zwischen zwei Katalysatorbetten angeordneten katalytisch inerten Betten vorgesehen sind und unterschiedliche Reaktionspartner stufenweise dem Reaktor zugeführt werden, wobei die Zufuhr der Reaktionspartner in das inerte Bett erfolgt.

2. Vorrichtung zur Durchführung katalytischer Reaktionen nach Anspruch 1 mit starker Wärmetönung, bei der ein Reaktionsgemisch durch ein Katalysatorbett und ein sich anschließendes Bett eines katalytisch inerten Materials geführt wird, denen Reaktionswärme durch indirekten Wärmetausch mittels Kühl- bzw. Heizschlangen entzogen bzw. zugeführt wird, dadurch gekennzeichnet, daß mehrere Katalysatorbetten mit jeweils zwischen zwei Katalysatorbetten angeordneten katalytisch inerten Betten vorgesehen sind.

3. Vorrichtung nach Anspruch 2, dadurch gekennzeichnet, daß zwei oder mehrere Katalysatorbetten in einem Reaktor installiert sind, die unterschiedliche Katalysatormaterialien enthalten.

## Claims

1. A process for carrying out catalytic reactions with strong heat tonality, wherein a reaction mixture is conducted through a catalyst bed and an adjoining bed composed of a catalytically inert material, reaction heat being withdrawn from and supplied to said beds by indirect heat exchange, characterised in that a plurality of catalyst beds are provided with respective, catalytically inert beds arranged between two catalyst beds, and different reaction partners are supplied in stages to the reactor, where the reaction partners are fed into the inert bed.

2. A device for implementing catalytic reactions as claimed in Claim 1 with strong heat tonality, wherein a reaction mixture is conducted through a catalyst bed and an adjoining bed composed of a catalytically inert material, reaction heat being withdrawn from and supplied to said beds by indirect heat exchange using cooling and heating coils, characterised in that a plurality of catalyst beds are provided with respective, catalytically inert beds arranged between two catalyst beds.

3. A device as claimed in Claim 2, characterised in that two or more catalyst beds containing different catalyst materials are installed in a reactor.

## Revendications

1. Procédé de mise en oeuvre de réactions catalytiques à fort dégagement de chaleur, dans lequel un mélange réactionnel passe à travers un lit catalytique et un lit consécutif d'un matériau inerte du point de vue catalytique, les chaleurs de réactions étant évacuées ou transportées par échange de chaleur indirect, caractérisé en ce qu'il implique plusieurs lits catalytiques entre chacun desquels sont placés des lits inertes du point de vue catalytique et en ce que les différents agents de la réaction sont envoyés dans le réacteur de façon graduelle, l'alimentation en lesdits agents de la réaction se produisant dans le lit inerte.

2. Appareillage pour la mise en oeuvre de réactions catalytiques à fort dégagement de chaleur selon la revendication 1, dans lequel un mélange réactionnel passe à travers un lit catalytique et un lit consécutif d'un matériau inerte du point de vue catalytique, dont les chaleurs de réactions sont évacuées ou transportées par échange de chaleur indirects au moyen de serpentin de refroidissement ou de chauffage, caractérisé en ce qu'il comporte plusieurs lits catalytiques, entre chacun desquels des lits inertes du point de vue catalytique sont placés.

3. Appareillage selon la revendication 2, caractérisé en ce que deux ou plusieurs lits catalytiques sont installés dans un réacteur, lesdits lits étant formés de différents matériaux catalytiques.

FIG. I